# EUROPEAN PATENT APPLICATION

(11) **EP 4 787 669 A1**
(43) Date of publication of application: **05.08.2026**
(21) Application number: 25224219.3
(22) Date of filing: 17.12.2025
(51) Int. Cl.: H02K 1/04, H02K 1/276, H02K 1/28

(54) **ROTOR**

(30) Priority: 30.01.2025 JP 2025013923
(71) Applicant: TOYOTA JIDOSHA KABUSHIKI KAISHA, Toyota-Shi, Aichi-Ken 471-8571 (JP)
(72) Inventor: YAMATO, Fumiaki, Toyota-shi, 471-8571 (JP); KAWASAKI, Shunsuke, Toyota-shi, 471-8571 (JP); HECTOR, San Juan Juanchi, Toyota-shi, 471-8571 (JP); TAKENO, Motoki, Toyota-shi, 471-8571 (JP)
(74) Representative: TBK

(57) **Abstract**

The rotor (2; 102) may include a shaft (10) extending in an axial direction; a rotor core (12; 112) fixed to an outer surface of the shaft (10) and comprising a magnet housing hole (30); a magnet (14; 114) housed in the magnet housing hole (30); and a first end plate (16; 116) formed from a non-magnetic body, wherein the first end plate (16; 116) abuts a first end surface (12A) of the rotor core (12; 112), which is one of axially opposite end surfaces. The magnet housing hole (30) may extend in the axial direction from a first opening(32A) to a second opening (32B) formed in a second end surface (12B) of the rotor core (12; 112), which is other of the axially opposite end surfaces. The first end plate (16; 116) may comprise a first depression (40A) facing the first opening (32A).

## Description

### CROSS REFERENCE TO RELATED APPLICATION

This application claims priority to Japanese Patent Application No. 2025-013923 filed on January 30, 2025. The entire content of the priority application is incorporated herein by reference.

### TECHNICAL FIELD

The art disclosed herein relates to a rotor.

### BACKGROUND ART

Japanese Patent Application Publication No. 2018-067978 describes a rotor including a rotor core having a magnet housing hole and a magnet housed in the magnet housing hole.

### SUMMARY

Generally, rotors comprise a shaft having an outer surface to which the rotor core is fixed and extending in an axial direction, and an end plate formed from a non-magnetic body and abutting an axial end surface of the rotor core. In such rotors, it is not desirable that the magnet contacts the end plate.

The disclosure herein provides a technology that prevents contact between a magnet and an end plate.

In a first aspect of the technology disclosed herein, a rotor may comprise: a shaft extending in an axial direction; a rotor core fixed to an outer surface of the shaft and comprising a magnet housing hole; a magnet housed in the magnet housing hole; and a first end plate formed from a non-magnetic body, wherein the first end plate abuts a first end surface of the rotor core, which is one of axially opposite end surfaces of the rotor core. The magnet housing hole may extend in the axial direction from a first opening formed in the first end surface to a second opening formed in a second end surface of the rotor core, which is other of the axially opposite end surfaces. The first end plate may comprise a first depression facing the first opening of the rotor core.

In the configuration above, the first depression may provide a space between the first end plate and one axial end of the magnet, which prevents contact between the magnet and the first end plate.

### BRIEF DESCRIPTION OF DRAWINGS

FIG. 1 is a schematic diagram of a rotor 2.
FIG. 2 is an enlarged view of a rotor core 12 near a magnet housing hole 30.
FIG. 3 is a schematic diagram of a rotor 102.
FIG. 4 is an enlarged view near a third plate 120.

### DETAILED DESCRIPTION

In a first aspect of the technology disclosed herein, a rotor may comprise: a shaft extending in an axial direction; a rotor core fixed to an outer surface of the shaft and comprising a magnet housing hole; a magnet housed in the magnet housing hole; and a first end plate formed from a non-magnetic body, wherein the first end plate abuts a first end surface of the rotor core, which is one of axially opposite end surfaces of the rotor core. The magnet housing hole may extend in the axial direction from a first opening formed in the first end surface to a second opening formed in a second end surface of the rotor core, which is other of the axially opposite end surfaces. The first end plate may comprise a first depression facing the first opening of the rotor core.

In a second aspect according to the first aspect, a filler sheet that abuts the magnet may be disposed in the first depression. The filler sheet may be constituted of a material having lower hardness than the first end plate.

In the configuration above, the filler sheet prevents contact between the magnet and the first end plate and can position the magnet in the axial direction.

In a third aspect according to the second aspect, a thermal conductivity of the filler sheet may be higher than a thermal conductivity of air.

The configuration above facilitates heat transfer from the magnet to the first end plate, thereby decreasing the temperature of the magnet.

In a fourth aspect according to the third aspect, the filler sheet may be constituted of a foaming material.

The configuration above allows the filler sheet to be readily arranged within the first depression.

In a fifth aspect according to any one of the second to fourth aspects, an outer surface of the magnet may be covered by a foam sheet. A thermal conductivity of the filler sheet may be higher than a thermal conductivity of the foam sheet.

In the configuration above, positioning of the magnet in a radial direction can be accomplished by the foam sheet. Further, the temperature of the magnet can be decreased compared to a configuration where the foam sheet is disposed in the first depression.

In a sixth aspect according to any one of the second to fifth aspects, an area of an opening of the first depression which faces the magnet may be larger than an area of an end surface of the magnet that faces the first depression.

The configuration above further prevents contact between the magnet and the first end plate.

In a seventh aspect according to any one of the first to sixth aspects, the rotor may further comprise a second end plate formed from the non-magnetic body and abutting the second end surface of the rotor core. The second end plate may comprise a second depression that faces the second opening of the rotor core.

The configuration above prevents contact between the magnet and the second end plate.

In an eighth aspect according to any one of the first to seventh aspects, the magnet may extend from the first opening to the second opening.

### (Embodiment)

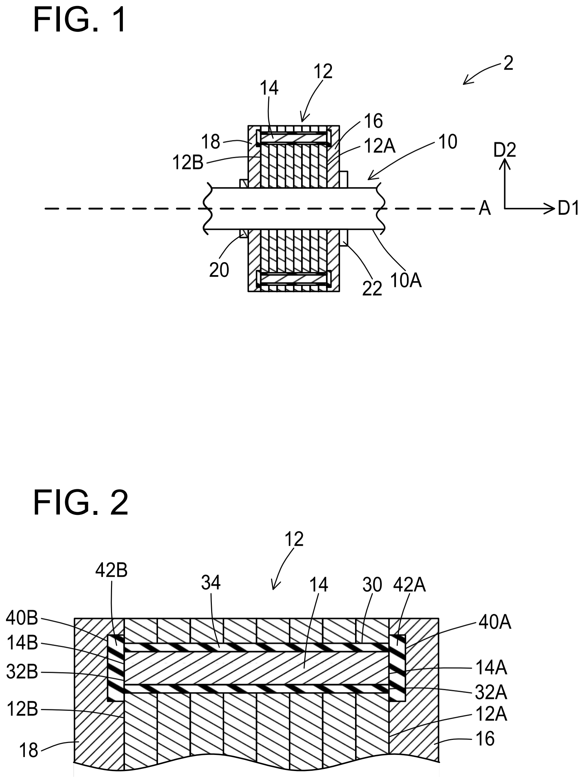

Referring to FIGS. 1 and 2, a rotor 2 is described. The rotor 2 is a rotor of an electric motor mounted on, for example, an electric vehicle. Herein, a cylindrical coordinate system comprising an axial direction D1, a radial direction D2, and a circumferential direction is defined with a rotation axis A of the rotor 2 as a reference. The axial direction D1 is parallel to the rotation axis A of the rotor 2 and defined by a coordinate axis coinciding with the rotation axis of the coordinate system. The radial direction D2 is perpendicular to the axial direction D1 and defined by a coordinate axis extending from the rotation axis A as the origin. The circumferential direction is perpendicular to the axial direction D1 and the radial direction D2 and defined by a coordinate axis extending circumferentially about the rotation axis A.

As illustrated in FIG. 1, the rotor 2 comprises a shaft 10, a rotor core 12, a plurality of magnets 14, a first end plate 16, a second end plate 18, and a nut 20. The shaft 10 extends in the axial direction D1. A locking member 22 is disposed on an outer surface 10A of the shaft 10. The locking member 22 protrudes in the radial direction D2 from the outer surface 10A of the shaft 10.

The rotor core 12 is formed of multiple identically-shaped magnetic steel sheets stacked in the axial direction D1. The rotor core 12 has a cylindrical shape. The rotor core 12 is arranged coaxially with the rotation axis A of the rotor 2. The inner circumferential surface of the rotor core 12 abuts the outer surface 10A of the shaft 10.

As illustrated in FIG. 2, the rotor core 12 has a plurality of magnet housing holes 30. The magnet housing holes 30 are arranged in the circumferential direction. Each magnet housing hole 30 extends in the axial direction D1 from a first opening 32A formed in a first end surface 12A of the rotor core 12, which is one of the axially opposing end surfaces of the rotor core 12, to a second opening 32B formed in a second end surface 12B of the rotor core 12, which is the other of the axially opposing end surfaces of the rotor core 12. The magnet housing holes 30 penetrate the rotor core 12 in the axial direction D1.

Each magnet housing hole 30 houses a magnet 14 and a foam sheet 34 therein. The magnet 14 extends in the axial direction D1. The outer surface of the magnet 14 is covered by the foam sheet 34. The foam sheet 34 is constituted of a foaming material configured to expand when heated. The thermal conductivity of the foam sheet 34 is lower than that of air. In an example, the foam sheet 34 is formed by mixing a polymeric resin, such as an epoxy resin or a phenolic resin, with a foaming agent that foams at or above a predetermined foaming temperature and then causing the foaming agent to foam at or above the foaming temperature. The magnet 14 is positioned by the foam sheet 34 in the radial direction D2. The foam sheet 34 may cover the entire outer surface of the magnet 14 or cover only a part thereof.

Each of the first end plate 16 and the second end plate 18 is a disk-shaped plate having a through-hole at its center. The first end plate 16 and the second end plate 18 are formed from a non-magnetic body. As illustrated in FIG. 1, in the axial direction D1, the first end plate 16 is disposed between the locking member 22 on the shaft 10 and the first end surface 12A of the rotor core 12. Specifically, one of axially opposing end surfaces of the first end plate 16 (referred to as "first end surface of the first end plate 16") abuts the locking member 22 on the shaft 10, and the other of the axially opposing end surfaces of the first end plate 16 (referred to as "second end surface of the first end plate 16") abuts the first end surface 12A of the rotor core 12.

The second end plate 18 is disposed, in the axial direction D1, between the nut 20 and the second end surface 12B of the rotor core 12. Specifically, one of axially opposing end surfaces of the second end plate 18 (referred to as "first end surface of the second end plate 18") abuts the second end surface 12B of the rotor core 12, and the other of the axially opposing end surfaces of the second end plate 18 (referred to as "second end surface of the second end plate 18") abuts the nut 20. The nut 20 is tightened to the shaft 10 and presses the rotor core 12 in the axial direction D1 via the first end plate 16 and the second end plate 18.

As illustrated in FIG. 2, the first end plate 16 comprises first depressions 40A each facing corresponding one of the first openings 32A of the rotor core 12. Each first depression 40A can be considered as facing a first magnet end surface 14A of the corresponding magnet 14, which is one of axially opposing end surfaces of the magnet 14. The first depressions 40A are depressed from the second end surface of the first end plate 16 in the axial direction D1. The area of the opening of the first depression 40A is larger than the area of the first magnet end surface 14A of the magnet 14 and the area of the first opening 32A of the rotor core 12.

The second end plate 18 comprises second depressions 40B each facing corresponding one of the second openings 32B of the rotor core 12. Each second depression 40B can be considered as facing a second magnet end surface 14B of the corresponding magnet 14, which is the other of the axially opposing end surfaces of the magnet 14. The second depressions 40B are depressed from the first end surface of the second end plate 18 in the axial direction D1. The area of the opening of the second depression 40B is larger than the area of the second magnet end surface 14B of the magnet 14 and the area of the second opening 32B of the rotor core 12.

A first filler sheet 42A is disposed within each first depression 40A, and a second filler sheet 42B is disposed within each second depression 40B. The first filler sheet 42A abuts the first magnet end surface 14A of the magnet 14. The second filler sheet 42B abuts the second magnet end surface 14B of the magnet 14. The first filler sheet 42A and the second filler sheet 42B are constituted of a foaming material. The thermal conductivities of the first filler sheet 42A and the second filler sheet 42B are higher than that of the foam sheet 34 and that of air. Further, the material of the first filler sheet 42A and the second filler sheet 42B has lower hardness than materials of the first end plate 16 and the second end plate 18. In an example, the first filler sheet 42A and the second filler sheet 42B are each formed of a foam sheet in which a filler that improves thermal conductivity is incorporated. In a modification, the first filler sheet 42A and the second filler sheet 42B may be constituted of different materials. The magnet 14 is positioned in the axial direction D1 by the first filler sheet 42A and the second filler sheet 42B. Further, contact between the magnet 14 and the first and second end plates 16, 18 is prevented by the first filler sheet 42A and the second filler sheet 42B. Moreover, the first filler sheet 42A and the second filler sheet 42B facilitate heat transfer from the magnet 14 to the first and second end plates 16, 18.

As described above, the rotor 2 comprises the shaft 10 extending in the axial direction D1; the rotor core 12 fixed to the outer surface of the shaft 10 and comprising the magnet housing holes 30; the magnets 14 housed in the magnet housing holes 30; and the first end plate 16 formed from a non-magnetic body and abutting the first end surface 12A of the rotor core 12. Each magnet housing hole 30 extends in the axial direction D1 from the first opening 32A formed in the first end surface 12A to the second opening 32B formed in the second end surface 12B of the rotor core 12. The first end plate 16 comprises the first depressions 40A facing the first openings 32A of the rotor core 12.

In the configuration above, each first depression 40A provides a space between the first end plate 16 and one axial end of the corresponding magnet 14, which prevents contact between the magnets 14 and the first end plate 16.

To prevent contact between the magnets 14 and the first end plate 16, it can be contemplated to recess the first magnet end surfaces 14A of the magnets 14 relative to the first end surface 12A of the rotor core 12. In this case, the axial length of each magnet 14 is shorter than the axial length of the rotor core 12. In contrast, in the rotor 2 according to the present embodiment, the first magnet end surfaces 14A of the magnets 14 are substantially aligned with the first end surface 12A of the rotor core 12 in the axial direction D1. Therefore, the shortening of the axial length of magnets 14 relative to the axial length of the rotor core 12 can be prevented.

The first filler sheets 42A (example of "filler sheet") that abut the magnets 14 are disposed in the first depressions 40A. The first filler sheets 42A are constituted of a material having lower hardness than the first end plate 16.

In the configuration above, the first filler sheets 42A prevent contact between the magnets 14 and the first end plate 16, and the magnets 14 can be positioned in the axial direction D1 by the first filler sheets 42A.

The thermal conductivity of the material of the first filler sheets 42A is higher than the thermal conductivity of air.

The configuration above facilitates heat transfer from the magnets 14 to the first end plate 16, thereby decreasing the temperature of the magnet 14.

The first filler sheets 42A are constituted of a foaming material.

The configuration above allows the first filler sheets 42A to be readily disposed within the first depressions 40A.

The outer surface of each magnet 14 is covered by the foam sheet 34. The thermal conductivity of the first filler sheets 42A is higher than the thermal conductivity of the foam sheets 34.

In the configuration above, the magnets 14 can be positioned in the radial direction D2 by the foam sheets 34. Further, the temperature of the magnets 14 can be decreased compared to a configuration where the foam sheets 34 are disposed in the first depressions 40A.

The area of the opening of each first depression 40A which faces the corresponding magnet 14 is larger than the area of the first magnet end surface 14A of the corresponding magnet 14 (an example of "end surface of the magnet") that faces the first depression 40A.

The configuration above further prevents contact between the magnets 14 and the first end plate 16.

The rotor 2 further comprises the second end plate 18 formed from the non-magnetic body and abutting the second end surface 12B of the rotor core 12. The second end plate 18 comprises the second depressions 40B each facing corresponding one of the second openings 32B of the rotor core 12.

The configuration above prevents contact between the magnets 14 and the second end plate 18.

Each magnet 14 extends from the first opening 32A to the second opening 32B.

The embodiments have been described in detail in the above. However, these are only examples and do not limit the claims. The technology described in the claims includes various modifications and changes of the concrete examples represented above.

(Modification 1) The first depressions 40A and the second depressions 40B both may not have members such as sheets disposed therein. Further, either the first depressions 40A or the second depressions 40B may not have members such as sheets disposed therein.

(Modification 2) The hardness of the material of the first filler sheets 42A and the second filler sheets 42B may be equal to or higher than the hardness of the material of the first end plate 16.

(Modification 3) The thermal conductivity of the first filler sheets 42A and the second filler sheets 42B may be lower than the thermal conductivity of air and higher than the thermal conductivity of the foam sheets 34. Alternatively, the thermal conductivity of the first filler sheets 42A and the second filler sheets 42B may be lower than the thermal conductivity of the foam sheets 34.

(Modification 4) Either the first filler sheets 42A or the second filler sheets 42B or both of them may not be constituted of a foaming material. In this modification, either the first filler sheets 42A or the second filler sheets 42B or both of them may not expand when heated.

(Modification 5) Either the first filler sheets 42A or the second filler sheets 42B or both of them may be constituted of the material of the foam sheets 34.

(Modification 6) The second end plate 18 may not comprise the second depressions 40B. In this modification, the second magnet end surfaces 14B of the magnets 14 are recessed in the axial direction D1 relative to the second end surface 12B of the rotor core 12.

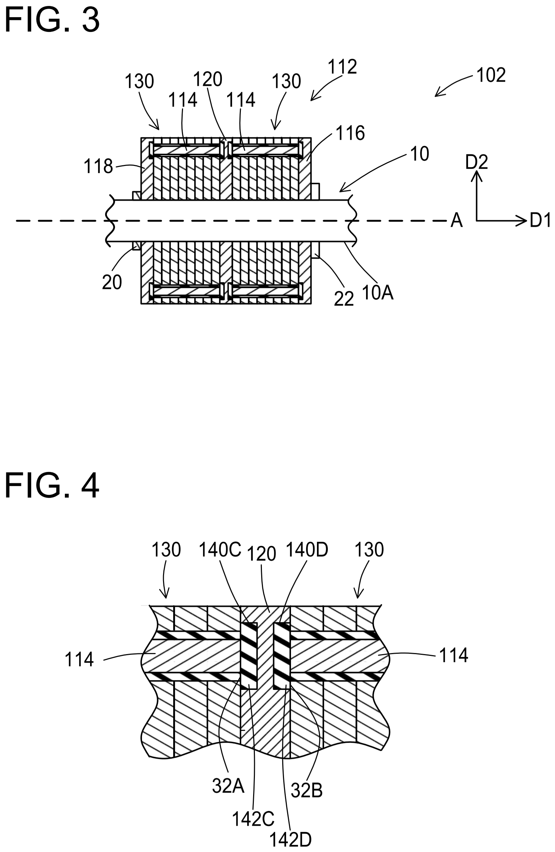

(Modification 7) Referring to FIGS. 3 and 4, a rotor 102 according to a modification 7 is described. For the modification, elements same as those of the embodiment are labeled with the same reference signs and descriptions for them are not repeated.

As illustrated in FIG. 3, the rotor 102 comprises a shaft 10, a rotor core 112 formed of a plurality of core blocks 130, a plurality of magnets 114, a first plate 116, a second plate 118, a third plate 120, and a nut 20. Each core block 130 has the same configuration as the rotor core 12 according to the above embodiment. The first plate 116 and the second plate 118 have the same configurations as the first end plate 16 and the second end plate 18 according to the above embodiment, respectively.

The third plate 120 is disposed between the first plate 116 and the second plate 118 in the axial direction D1. As illustrated in FIG. 4, the third plate 120 comprises third depressions 140C each facing corresponding one of first openings 32Aformed in one core block 130 and fourth depressions 140D each facing corresponding one of second openings 32B formed in the other core block 130. Third filler sheets 142C and fourth filler sheets 142D are disposed within the third depressions 140C and the fourth depressions 140D, respectively. This configuration can also achieve the same effects as the above embodiment.

The technical elements explained in the present description or drawings exert technical utility independently or in combination of some of them, and the combination is not limited to one described in the claims as filed. Moreover, the technology exemplified in the present description or drawings achieves a plurality of objects at the same time, and has technical utility by achieving one of such objects.

## Claims

1. A rotor (2; 102) comprising:
a shaft (10) extending in an axial direction;
a rotor core (12; 112) fixed to an outer surface of the shaft (10) and comprising a magnet housing hole (30);
a magnet (14; 114) housed in the magnet housing hole (30); and
a first end plate (16; 116) formed from a non-magnetic body, wherein the first end plate (16; 116) abuts a first end surface (12A) of the rotor core (12; 112), which is one of axially opposite end surfaces of the rotor core (12; 112),
wherein the magnet housing hole (30) extends in the axial direction from a first opening (32A) formed in the first end surface (12A) to a second opening (32B) formed in a second end surface (12B) of the rotor core (12; 112), which is other of the axially opposite end surfaces, and
the first end plate (16; 116) comprises a first depression (40A) facing the first opening (32A) of the rotor core (12).

2. The rotor (2; 102) as in claim 1, wherein a filler sheet (42A) that abuts the magnet (14; 114) is disposed in the first depression (40A), and
the filler sheet (42A) is constituted from a material having lower hardness than that of a material of the first end plate (16; 116).

3. The rotor (2, 102) as in claim 2, wherein a thermal conductivity of the filler sheet (42A) is higher than a thermal conductivity of air.

4. The rotor (2, 102) as in claim 3, wherein the filler sheet (42A) is constituted of a foaming material.

5. The rotor (2, 102) as in any one of claims 2 to 4, wherein an outer surface of the magnet (14; 114) is covered by a foam sheet (34),
and a thermal conductivity of the filler sheet (40A) is higher than a thermal conductivity of the foam sheet (34).

6. The rotor (2, 102) as in any one of claims 1 to 5, wherein an area of an opening of the first depression (40A) which faces the magnet (14; 114) is larger than an area of an end surface of the magnet (14; 114) that faces the first depression (40A).

7. The rotor (2) as in any one claims 1 to 6, further comprising a second end plate (18; 118) formed from the non-magnetic body and abutting the second end surface (12B) of the rotor core (12; 112),
wherein the second end plate (18; 118) comprises a second depression (40B) that faces the second opening (32B) of the rotor core (12; 112).

8. The rotor (2; 102) as in any one of claims 1 to 7, wherein the magnet (14; 114) extends from the first opening (32A) to the second opening (32B).
